# EUROPEAN PATENT APPLICATION

(11) **EP 1 513 323 A1**
(43) Date of publication of application: **09.03.2005**
(21) Application number: 04021057.7
(22) Date of filing: 03.09.2004
(51) Int. Cl.: H04M 1/02

(54) **Portable sliding-type digital communication device and locking apparatus thereof**

(30) Priority: 08.09.2003 KR 2003062628; 02.03.2004 KR 2004013920
(71) Applicant: Samsung Electronics Co., Ltd., Suwon-si, Gyeonggi-do (KR)
(72) Inventor: Kim, Jun c/o Samsung Electronics Co., Ltd., Suwon-si Gyeonggi-do (KR); Park, In-Gon c/o Samsung Electronics Co., Ltd., Suwon-si Gyeonggi-do (KR); Lee, Chang-Soo Samsung Electronics Co., Ltd., Suwon-si Gyeonggi-do (KR); Kim, Jae-Shik c/o Samsung Electronics Co., Ltd., Suwon-si Gyeonggi-do (KR); Kim, Hong-Bae c/o Samsung Electronics Co., Ltd., Suwon-si Gyeonggi-do (KR)
(74) Representative: Grünecker, Kinkeldey, Stockmair & Schwanhäusser Anwaltssozietät

(57) **Abstract**

Disclosed herein is a portable sliding-up digital communication device. The portable sliding-type digital communication device comprises a body housing having a display unit located on the top surface thereof, the display unit comprising a first display area and a second display area disposed adjacent to the first display area, a sliding cover moved along the body housing in a sliding fashion such that the sliding cover is apart from the body housing or close to the body housing for exposing or covering the second display area, and holding means formed at the rear surfaces of the body housing and the sliding cover for maintaining a final sliding coupling position of the sliding cover to the body housing. The first display area is constantly viewable and the second display area is selectively coverable depending upon the position of the sliding cover.

## Description

The present invention relates to a portable digital communication device including cellular phones, personal digital assistants and hand held personal computers, and more particularly to a portable sliding-type or pop-up digital communication device.

Generally, "portable communication devices" means electronic devices that are portable and enable owners of the devices to communicate through wireless communication. Such portable communication devices have become increasingly small, slim, and lightweight, whereby portability thereof is improved. Furthermore, such portable communication devices are capable of multimedia transmission, whereby the devices have various additional functions. Future portable communication devices will be even more miniaturized, lightweight, multipurpose devices with various functions, which will be easily adapted to various multimedia and Internet environments. The portable communication devices are electronic devices commonly used by people of all ages and both sexes all over the world, which are considered as necessities of life.

On the basis of their forms, the portable communication devices may be classified into several types of communication devices. For example, the portable communication devices may be classified into a bar-type communication device, a flip-type communication device, and a folder-type communication device. The bar-type communication device has a bar-type single housing, the flip-type communication device comprises a bar-type housing and a flip part pivotably attached to the housing, and the folder-type communication device comprises a bar-type housing and a folder part pivotably attached to the housing.

On the basis of where or how they are worn, the portable communication devices may also be classified into a necklace-type communication device and a wrist-type communication device. The necklace-type communication device is worn on the neck of a user by means of a string, and the wrist-type communication device is worn on the wrist of the user.

On the basis of how they are opened or closed, the portable communication devices may be further classified into a rotating-type communication device and a sliding-type communication device. The rotating-type communication device is characterized in that two housings are rotatably connected to each other while the housings are continuously opposite to each other. The rotating-type communication device is opened or closed by the rotation of the two housings in such a manner that the housings are rotated apart from or towards each other. On the other hand, the sliding-type communication device is characterized in that two housings slide in a longitudinal phone. The sliding-type communication device is opened or closed by a sliding movement of the two housings in such a manner that the housings are slid apart from or towards each other. The above-mentioned various types of communication devices will be easily appreciated by a person having an ordinary skill in the art to which the present invention pertains.

The portable communication devices have also been adapted to transmit/receive data at high speed in addition to an audio communication function. The portable communication devices use wireless communication technology for transmitting data at high speed, which will satisfy the increasing desires of the consuming public.

Another increasing trend provides a camera lens in each portable communication device to transmit image signals. The portable communication device has a camera lens module mounted outside or inside a main body of the portable communication device so that a user of the device can talk with another user of a similar device while looking at each other, or take pictures of his/her desired subjects.

However, the camera lens adopted in the conventional portable communication device, especially the sliding-type communication device, is constantly exposed to the environment with the result that it is not possible to prevent introduction of foreign matter into the camera lens. Consequently, the camera lens of the conventional portable communication device is easily contaminated or damaged. Furthermore, the sliding mechanism often becomes contaminated with debris, which reduces the ease of which the sliding occurs.

Therefore, the present invention has been made in view of the above problem.

It is the object of the present invention to provide a portable sliding-type digital communication device.

This object is solved by the subject matter of the independent claims.

Preferred embodiments are defined by the dependent claims.

It is an aspect of the present invention to provide a portable digital communication device that is capable of accurately performing coupling and separating operations in a sliding fashion through the use of holding means.

It is another aspect of the present invention to provide a portable digital communication device comprising a display unit, a portion of which is exposed to or hidden from the outside by means of a sliding movement of a cover.

It is yet another aspect of the present invention to provide a portable digital communication device comprising a locking apparatus for locking a sliding cover of the portable digital communication device.

In accordance with one aspect of the present invention, the above and other objects can be accomplished by the provision of a portable sliding-type digital communication device comprising: a body housing having a display unit arranged on the top surface thereof, the display unit comprising a first display area and a second display area disposed adjacent to the first display area, the first display area being constantly viewable while the second display area is selectively coverable; a sliding cover moved along the body housing in a sliding fashion such that the sliding cover is apart from the body housing or close to the body housing for exposing the second display area or covering the second display; and holding means formed at the rear surfaces of the body housing and the sliding cover for accurately maintaining the final sliding coupling position of the sliding cover to the body housing.

In accordance with another aspect of the present invention, there is provided a locking apparatus of a portable sliding-type digital communication device, comprising: a body housing having a display unit including a first display area and a second display area disposed adjacent to the first display area, the first display area being constantly viewable while the second display area is selectively coverable; a sliding cover movable along the body housing in a sliding fashion for exposing or covering the second display area; a guide unit provided at both sides of the body housing and attached to the sliding cover for guiding the sliding cover such that the sliding cover can be slid apart from and toward the body housing; and a pair of locking units provided at both sides of the body housing for locking or unlocking a sliding movement of the guide unit.

The above object and other aspects, features and other advantages of the present invention will be more clearly understood from the following detailed description taken in conjunction with the accompanying drawings, in which:
Fig. 1 is a perspective view of a portable sliding-type digital communication device according to a first preferred embodiment of the present invention as seen from the right side of the device;
Fig. 2 is a perspective view of the portable sliding-type digital communication device according to the first preferred embodiment of the present invention as seen from the left side of the device;
Fig. 3 is a perspective view corresponding to Fig. 2, showing the sliding cover of the portable sliding-type digital communication device moved upward;
Fig. 4 is a front view of the portable sliding-type digital communication device shown in Fig. 3;
Fig. 5 is a rear view of the portable sliding-type digital communication device shown in Fig. 3;
Fig. 6 is an exploded perspective view showing a locking apparatus of a portable sliding-type digital communication device according to a second preferred embodiment of the present invention;
Fig. 7 is a plan view showing the locking apparatus of the portable sliding-type digital communication device according to the second preferred embodiment of the present invention;
Fig. 8 is a perspective view showing a guide unit of the locking apparatus of the portable sliding-type digital communication device according to the second preferred embodiment of the present invention;
Fig. 9 is a perspective view showing assembly of the locking apparatus of the portable sliding-type digital communication device according to the second preferred embodiment of the present invention;
Fig. 10 is an enlarged exploded perspective view showing the locking apparatus of the portable sliding-type digital communication device according to the second preferred embodiment of the present invention;
Fig. 11 is a front view showing a lock of the locking apparatus of the portable sliding-type digital communication device according to the second preferred embodiment of the present invention;
Fig. 12 is a cutaway plan view of the locking apparatus of the portable sliding-type digital communication device according to the second preferred embodiment of the present invention before the locking apparatus is operated;
Fig. 13 is a cutaway plan view of the locking apparatus of the portable sliding-type digital communication device according to the second preferred embodiment of the present invention after the locking apparatus is operated;
Fig. 14 is an enlarged plan view of a portion of Fig. 12, showing the locking apparatus of the present invention before operation of the locking apparatus; and
Fig. 15 is an enlarged plan view of a portion of Fig. 12, showing the locking apparatus of the present invention during operation of the locking apparatus.

Now, a preferred embodiment of the present invention will be described in detail with reference to the accompanying drawings. In the following, a detailed description of known functions and configurations incorporated herein will be omitted when it may obscure the subject matter of the present invention.

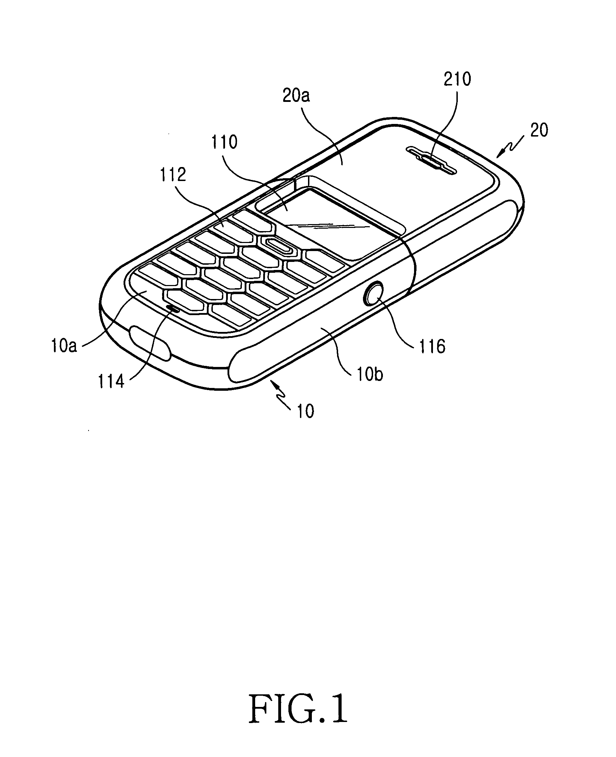

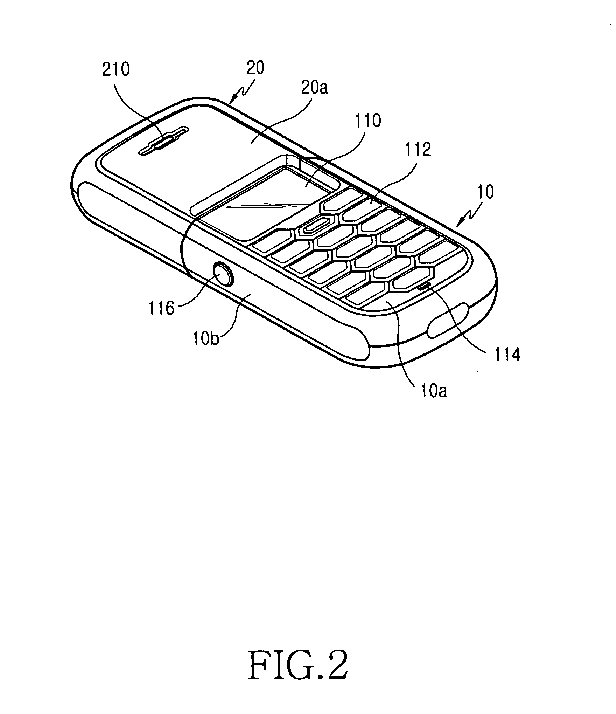

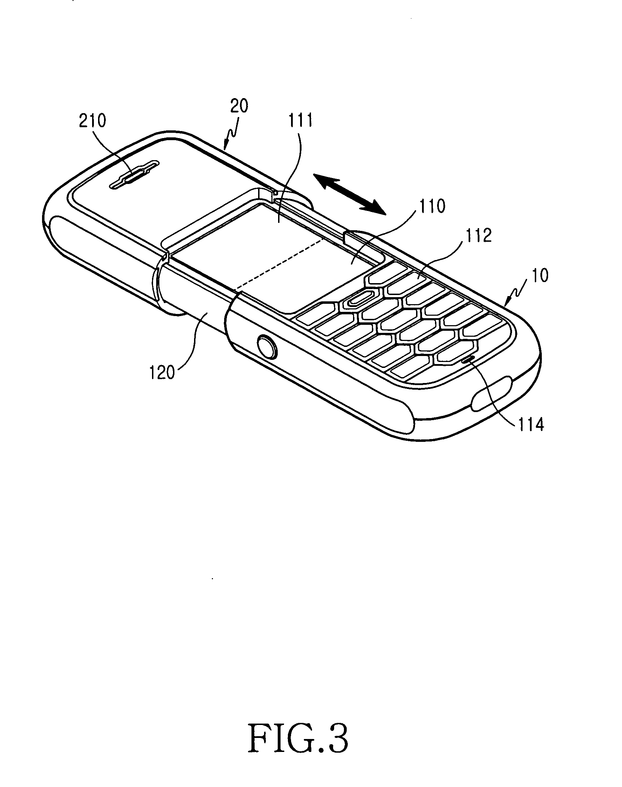

As shown in Figs. 1 to 5, a portable digital communication device according to a preferred embodiment of the present invention is a sliding-type communication device. The term "sliding-type" defines the manner in which a sliding cover 20, which is mechanically attached to a body housing 10, is moved upward along the body housing 10 in a sliding fashion in one direction of the arrow shown in Fig. 3. The sliding can be automatical, semi-automatical, or manual. The sliding cover 20, which has been moved upward in a sliding fashion can be moved back, i.e., moved downward to the body housing 10 in the other direction of the arrow shown in Fig. 3. The sliding cover 20 serves to expose or cover a prescribed portion of the body housing 10 to or from the outside. The term "sliding-type" may be expressed as the term "pop-up". It should be noted that the sliding cover 20 is operated automatically, semi-automatically, or manually, as described above. In case that the sliding cover 20 is operated automatically, a motor known in the art is also needed.

The portable digital communication device of the present invention comprises the body housing 10 having a display unit 110 and 111 arranged on the top surface 10a of the body housing. The display unit 111 is exposed to or covered depending on whether the sliding cover 20 is opened or closed. The sliding cover 20 is movable along the body housing 10 in a sliding fashion such that the sliding cover 20 is in a open or closed position. Holding means is formed at the bottom surface 10c of the body housing 10 and at the bottom surface 20b of the sliding cover 20 for accurately maintaining the sliding movement of the sliding cover 20.

The body housing 10 further has a first key array 112 and a microphone unit 114 arranged on the top surface 10a thereof. The first key array 112 comprises a plurality of keys. The microphone unit 114 is disposed adjacent to the first key array 112. Also, the body housing 10 has a second key array 116 arranged on the side surfaces thereof. The second key array comprises two keys arranged opposite to each other at the side surfaces of the body housing 10. The display unit of the body housing 10 comprises a first display area 110, which is constantly exposed to the outside so that data displayed on the first display area 110 can always be seen, and a second display area 111 disposed adjacent to the first display area 110, which is selectively exposed to or covered by means of a sliding movement of the sliding cover 20.

It is preferable that data necessary to be viewed at all times is displayed on the first display area 110, and that non-essential data is displayed on the second display area 111.

The display units 110 and 111 may be made up of a well-known LCD module, a touch screen, or a holographic screen. The holographic screen may produce two-dimensional or three-dimensional holograms. The display units 110 and 111 may also be two separate units, or one display having its image area separated by programming.

As described above, the display unit is divided into the first and second display areas 110 and 111. The first display area 110 is constantly viewable irrespective of the position of the sliding cover 20, whereas the second display area 111 is selectively exposed to the outside depending on the position of the sliding cover 20. It should be noted that the display unit is merely divided into the first and second display areas 110 and 111 on the basis of whether the sliding cover 20 is opened or closed.

The sliding cover 20 has a speaker unit 210 arranged on the top surface 20a thereof.

Also, the body housing 10 has a camera lens 118 arranged on the bottom surface thereof, by means of which a user of the portable digital communication device can talk with another user of the portable digital communication device while looking at each other, or take pictures of his/her desired subjects. The camera lens 118 is protected in such a manner that it is exposed to or covered from the outside depending on the position of the sliding cover 20. In other words, the sliding cover 20 serves to protect the camera lens 118 from the external environment.

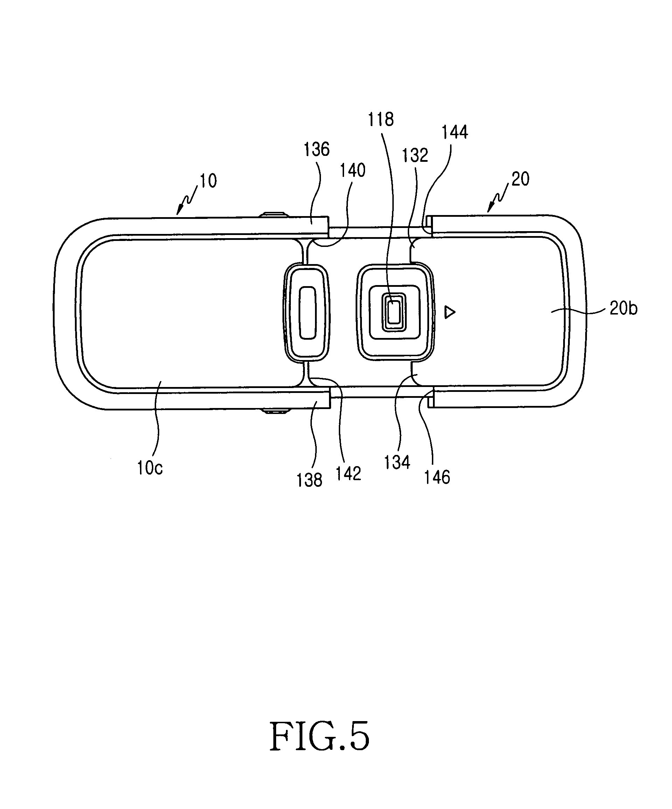

As shown in Fig. 5, the holding means is provided to accurately maintain the sliding coupling between the body housing 10 and the sliding cover 20. Especially, the holding means serves to accurately maintain the final coupling position of the sliding cover 20 within a prescribed distance. The holding means is comprised in the following manner. A pair of first protrusions 132 and 134 formed at the bottom surface 20b of the sliding cover 20 and extended in the direction of sliding coupling of the sliding cover 20 to the body housing 10. A pair of first grooves 144 and 146 formed at the outsides of the first protrusions 132 and 134, respectively, and recessed in the direction of sliding separation of the sliding cover 20 from the body housing 10. A pair of second protrusions 136 and 138 formed at the bottom surface 10c of the body housing 10 and extended in the direction of sliding coupling of the sliding cover 20 to the body housing 10. Finally, a pair of second grooves 140 and 142 formed at the insides of the second protrusions 136 and 138, respectively, and recessed in the direction of sliding separation of the sliding cover 20 from the body housing 10.

The first protrusions 132 and 134 are engaged into the second grooves 140 and 142, respectively. Similarly, the second protrusions 136 and 138 are engaged into the first grooves 144 and 146, respectively. Each of the first protrusions 132 and 134 is formed in the shape supplementary to that of each of the second grooves 140 and 142, and each of the second protrusions 136 and 138 is formed in the shape supplementary to that of each of the first grooves 144 and 146. The first protrusions 132 and 134, the second protrusions 136 and 138, the first grooves 144 and 146, and the second grooves 140 and 142 are curved, rounded shapes. The first protrusions 132 and 134 and the second grooves 140 and 142 are rounded at their corners.

The sliding movement of the sliding cover 20 along the body housing 10 is stabilized by means of a side guide rail 120, which is shown in Fig. 3. The side guide rail 120 is preferably made of a metallic material, especially a lightweight aluminum alloy.

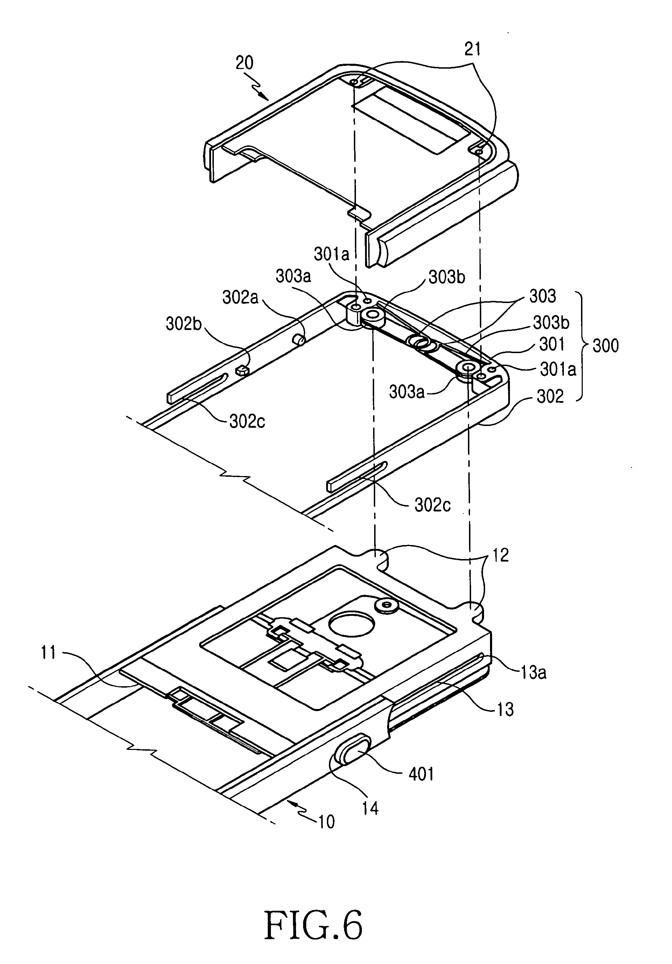

Operation of the locking apparatus of a portable sliding-type digital communication device according to a second preferred embodiment of the present invention will be described in detail below with reference to Figs. 6 to 15.

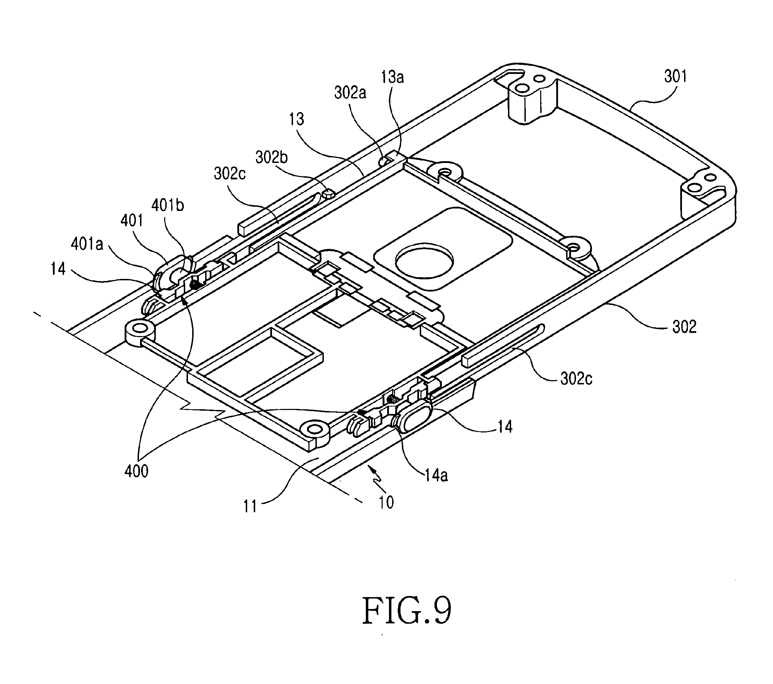

Referring to Figs. 6 and 9, the locking apparatus of the portable sliding-type digital communication device comprises a body housing 10, a sliding cover 20, a guide unit 300, and a pair of locking units 400.

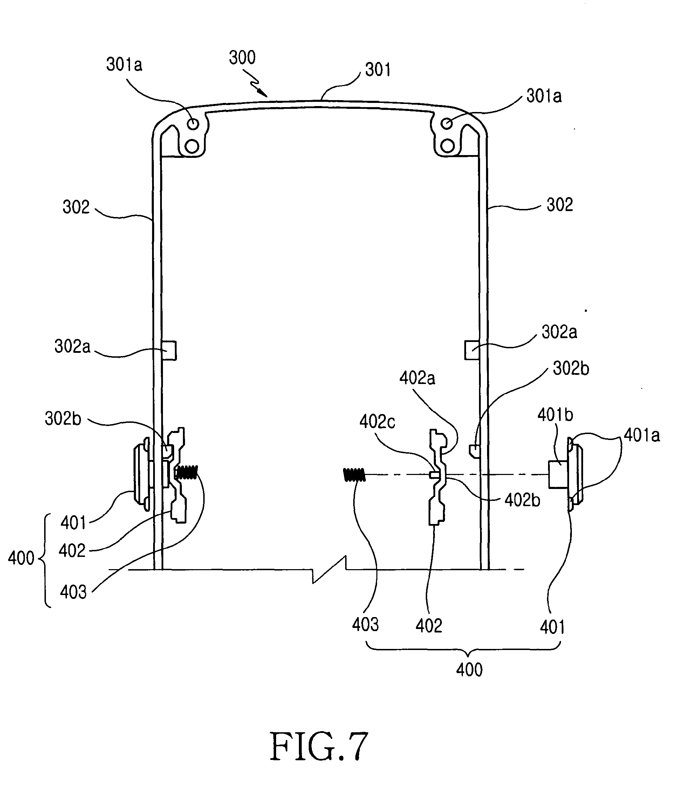

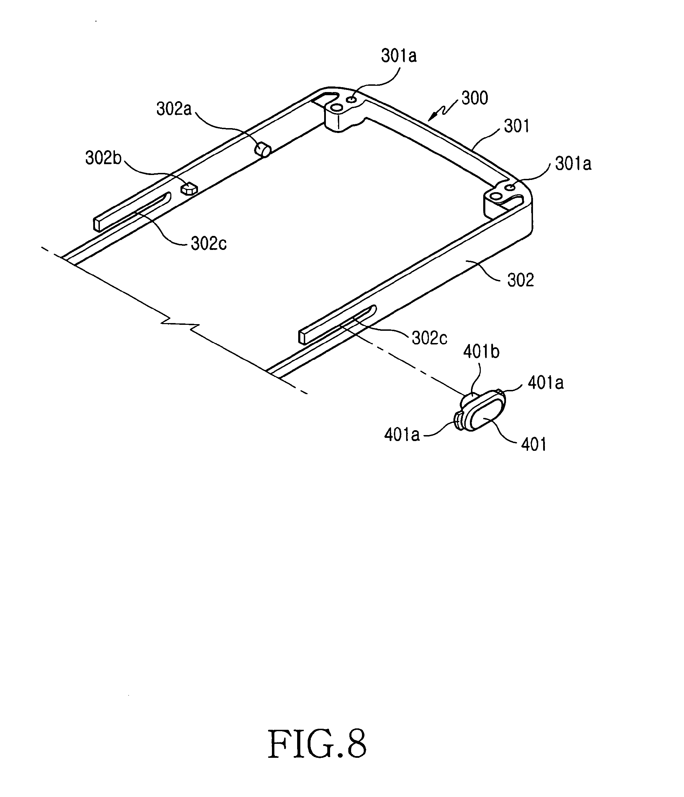

As shown in Figs. 7 and 8, the body housing 10 is provided at prescribed positions on both sides thereof with a pair of button holes 14 as shown in Figs. 6 and 9. When buttons 401 of the locking units 400 provided in the pair of button holes 14 are pressed, the buttons 401 are moved toward the inside of the body housing 10.

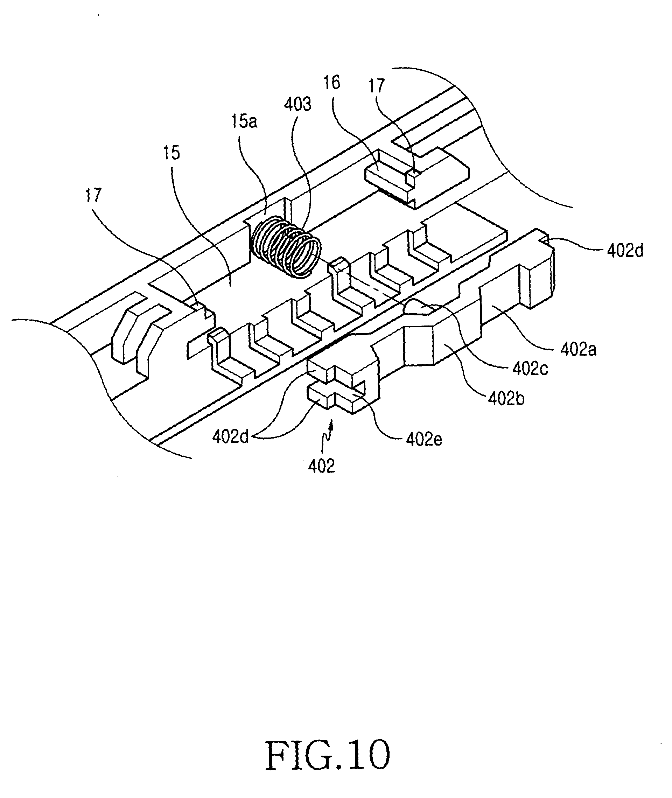

As shown in Figs. 9 and 10, each button 401 is provided at the upper and lower parts thereof with a pair of button side latching protrusions 401a, which are engageable within latching jaws 14a formed about each of the button holes 14 so that, when engaged, separation of the buttons 401 from the corresponding button holes 14 is prevented.

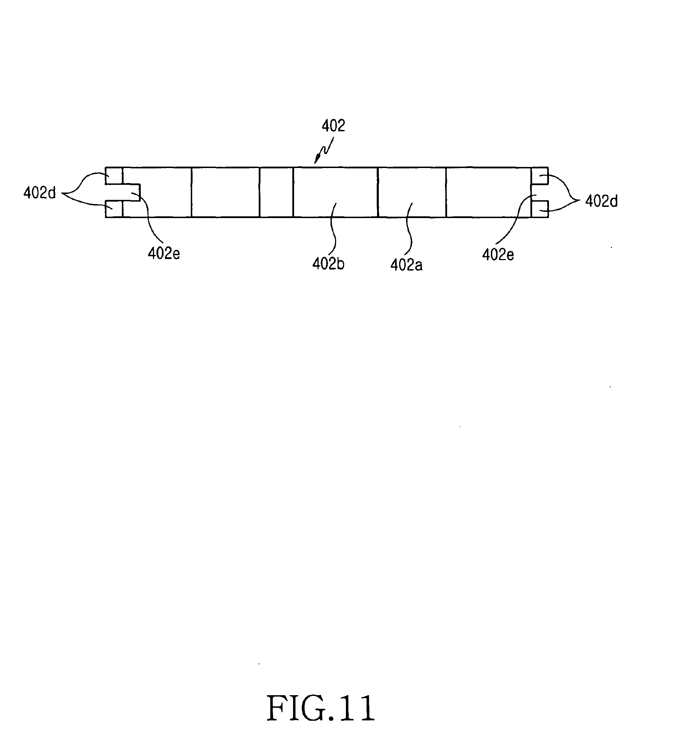

As shown in Figs. 10 and 11, a pair of lockers 402 is provided at positions corresponding to the buttons 401. The lockers 402 are moved right and left as the buttons 401 are pressed so that the lockers 402 are engaged with or disengaged from locking protrusions 302b of guide rails 302. Consequently, the lockers 402 can be moved right and left along with the corresponding buttons 401.

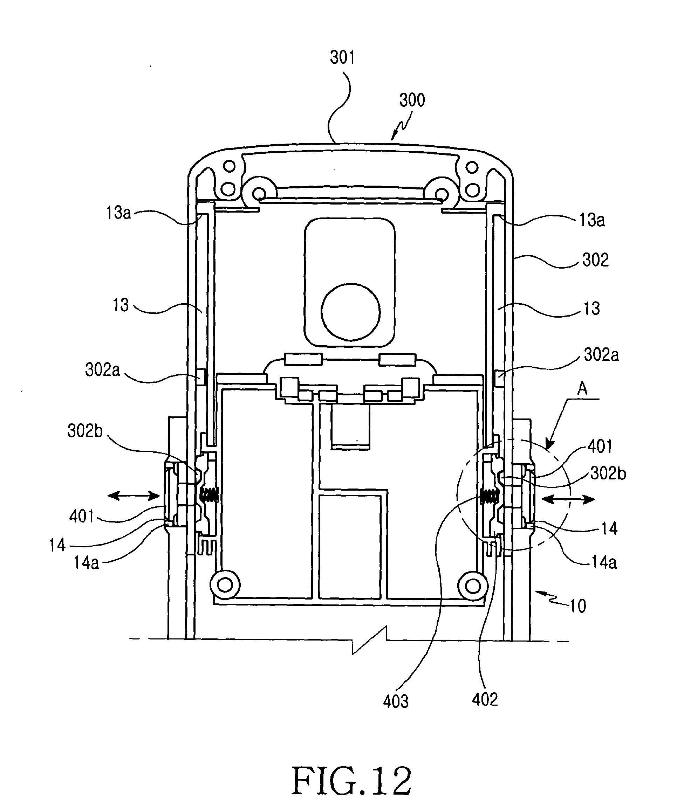

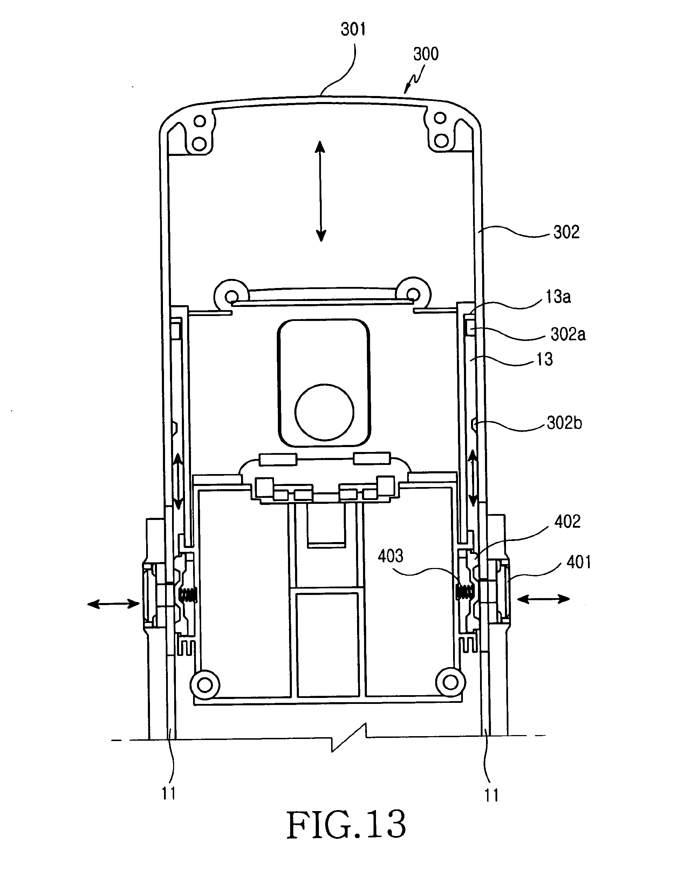

As shown in Figs. 12 and 13, the locking protrusion 302b of each guide rail 302 is separated from at least one locker groove 402a formed at each locker 402. The guide rails 302 are slid upward in the longitudinal direction of the body housing 10 in such a manner that the guide rails 302 are apart from the body housing 10.

As shown in Figs. 12 and 13, the guide unit 300, which is attached to the sliding cover 20, is provided at both sides of the body housing 10. A guide head part 301 of the guide unit 300 has a pair of torsion springs 303 mounted therein. The torsion springs 303 provide elastic forces necessary to slide the sliding cover 20. By means of the elastic forces of the torsion springs 303, the sliding cover 20 can be slid toward the upper part of the body housing 10.

As shown in Fig. 6, one end 303a of each torsion spring 303 is connected to a corresponding first spring connection part 12 formed at one end of the body housing 10. The other end 303b of each torsion spring 303 is connected to a corresponding second spring connection part 21 formed at the sliding cover 20 and to a corresponding third spring connection part 301a formed at the guide head part 301, whereby elastic actions of the torsion springs 303 can be performed.

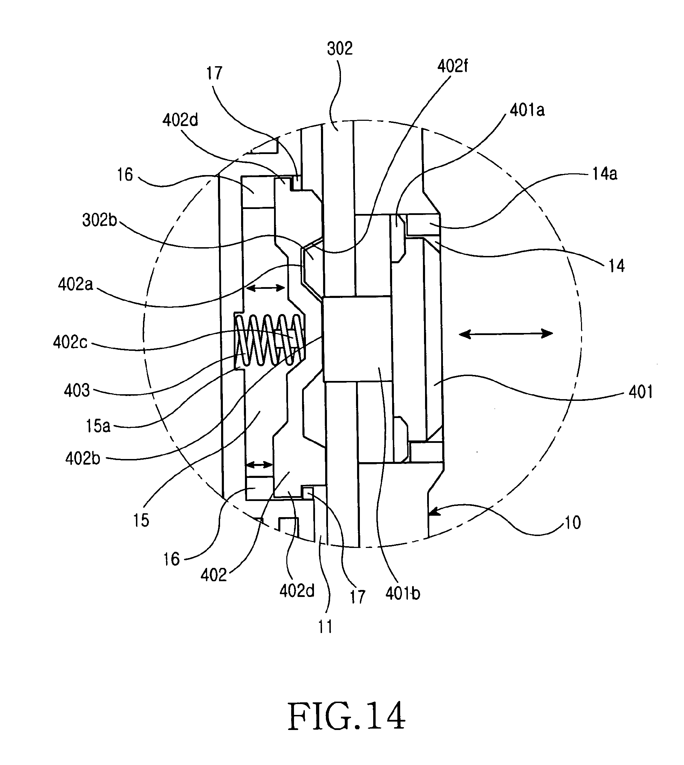

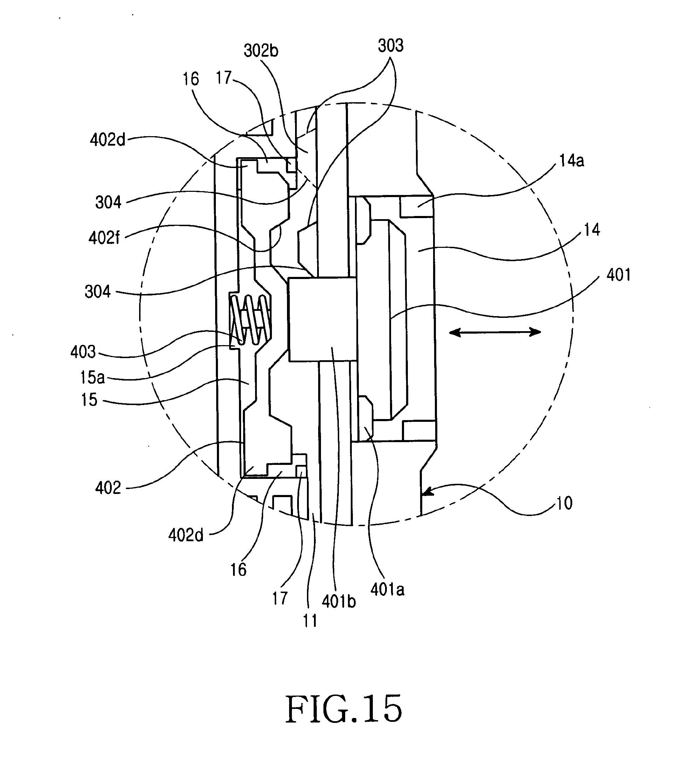

As shown in Figs. 14 and 15, each locker 402 is provided at the center part of one side thereof with a protrusion contacting part 402b, which contacts the end of a button protrusion of each button 401. When the buttons 401 are pressed, the protrusion contacting parts 402b are moved inward. Consequently, the lockers 402 are moved inward.

As shown in Fig. 15, coil springs 403, which are provided for each locker 402, are disposed in the lockers 402, respectively, for providing elastic forces necessary to move the lockers 402 outward.

Each of the coil springs 403 is engaged with a corresponding supporting protrusion 402c formed at the center part of the other side of each locker 402. The supporting protrusions 402c support the coil springs 402 in such a manner that elastic action of the coil springs 403 can be performed.

At the centers of a pair of engagement parts 15, which will be described below, are formed spring locating grooves 16a, in which the coil springs 403 are securely located.

As shown in Figs. 14 and 15, the body housing 10 is provided at prescribed positions on both sides thereof with a pair of engagement parts 15, in which the lockers 402 are securely located, while the lockers 402 are moved right and left.

At the upper and lower parts of each engagement part 15 are formed locker guide rails 16, which are engaged with locker guide grooves 402e formed at each locker 402 for guiding the corresponding locker 402. Consequently, the locker guide grooves 402e are moved along the locker guide rails 16 when the lockers 402 are moved right and left.

As shown in Figs. 12 and 15, each locker 402 is provided with separation preventing protrusions 402d for preventing separation of the locker 402 from the corresponding engagement part 15. At one end of each locker guide rail 16 is formed a locker catching jaw 17, by which the corresponding separation preventing protrusion 402d is caught.

As shown in Figs. 6 and 13, each guide rail 302 is provided, with a rail side through-hole 302c located in the longitudinal direction of the guide rail 302, through which the button protrusion 401b of the corresponding button 401 is inserted. When the buttons 401 are pressed, the button protrusions 401b are inserted through the rail side through-holes 302c. As a result, the guide rails 302 can be slid toward the upper part of the body housing 10 along the rail side through-holes 302c.

As shown in Figs. 13 and 15, each guide rail 302 is provided at the inside thereof with a sliding protrusion 302a, which is engaged in a sliding groove 13 formed on each side of the body housing 10. The sliding protrusions 302a are slid along the sliding grooves 13 of the body housing 10 so that the guide rails 302 can slide upward.

The sliding grooves 13 are formed in the longitudinal direction of the body housing 10.

The locking protrusions 302b of the guide rails 302 engage with stoppers 13a formed at the upper ends of the sliding grooves 13 for stopping the sliding movement of the guide rails 302.

In the above-mentioned manner, the sliding cover 20 is slid apart from the body housing 10 so that a second display area 111 of the body housing 10 is exposed.

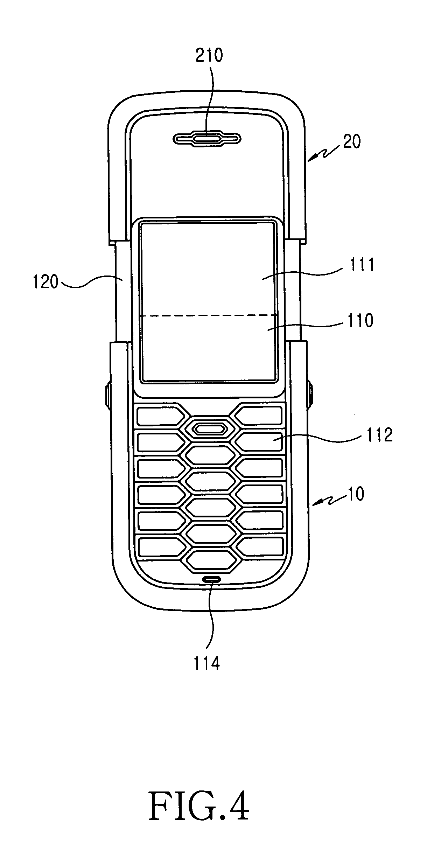

As shown in Figs. 1 and 4, the sliding cover 20 is slid downward toward the body housing 10 when the sliding cover 20 is to be returned to its original position.

As shown in Figs. 14 and 15, the guide rails 302 are inserted in the guide holes 11 formed at both sides of the body housing 10, and the locking protrusions 302b formed at the insides of the guide rails 302 are securely located in the locker grooves 402a of the lockers 402.

As shown in Fig. 15, a protrusion side catching surface 303 is formed at the upper side of each sliding locking protrusion 302b. The protrusion side catching surface 303 is caught by a catching jaw 402f formed at each locker groove 402a.

At the lower side of each sliding locking protrusion 302b is formed an inclined surface 304, by which the sliding locking protrusion 302b can be easily inserted into the corresponding locker groove 402a.

Although the preferred embodiments of the present invention have been disclosed for illustrative purposes, those skilled in the art will appreciate that various modifications, additions and substitutions are possible, without departing from the scope of the invention as disclosed in the accompanying claims. For example, the display unit may not be necessarily mounted to the body housing of the portable sliding-type digital communication device. The display unit may be mounted to the sliding cover of the portable sliding-type digital communication device so that the display unit can be moved in a sliding fashion along with the sliding cover.

## Claims

1. A portable sliding-type digital communication device, comprising:
a body housing having a display unit located on the top surface thereof, the display unit comprising a first display area and a second display area disposed adjacent to the first display area, the first display area being constantly viewable, the second display area is selectively coverable;
a sliding cover movable along the body housing in a sliding fashion for exposing or covering the second display area; and
holding means formed at the rear surfaces of the body housing and the sliding cover for maintaining a coupling position of the sliding cover to the body housing.

2. The device as set forth in claim 1, wherein the body housing has a first key array and a microphone unit arranged on the top surface thereof, the first key array having a plurality of keys, the microphone unit being disposed adjacent to the first key array, the body housing having a second key array arranged on the side surfaces thereof, the second key array having two keys arranged opposite to each other at the side surfaces of the body housing, and the body housing having a camera lens arranged on the bottom surface thereof, wherein the camera lens is exposed covered depending on the position of the sliding cover.

3. The device as set forth in claim 1 or 2, wherein the sliding cover has a speaker unit mounted thereto.

4. The device as set forth in one of claims 1 to 3, wherein the holding means comprises:
a pair of first protrusions formed at the bottom surface of the sliding cover and extended in the direction of sliding coupling of the sliding cover relative to the body housing;
a pair of first grooves, one of each formed at the outside of each at the first protrusions, and recessed in the direction of the sliding cover from the body housing;
a pair of second protrusions formed at the bottom surface of the body housing and extended in the direction of sliding coupling of the sliding cover relative to the body housing; and
a pair of second grooves one of each formed at the inside of each of the second protrusions, and recessed in the direction of sliding separation of the sliding cover from the body housing,
wherein the first protrusions, the first grooves, the second protrusions and the second grooves maintain a final coupling position of the sliding cover.

5. The device as set forth in one of claims 1 to 4, wherein the first and second protrusions and the first and second grooves are rounded shapes, and the first protrusions and the second grooves are rounded at their corners.

6. A locking apparatus for a portable sliding-type digital communication device, comprising:
a body housing having a display unit including a first display area and a second display area disposed adjacent to the first display area, the first display area being constantly viewable while the second display area is selectively coverable;
a sliding cover movable along the body housing in a sliding fashion for exposing or covering the second display area;
a guide unit provided at both sides of the body housing and attached to the sliding cover for guiding the sliding cover such that the sliding cover can be slid apart from and toward the body housing; and
two locking units, one provided at each side of the body housing for locking the guide unit.

7. The apparatus as set forth in claim 6, wherein the guide unit comprises:
a guide head part attached to the inside of the sliding cover;
a guide rail formed at each end of the guide head part, the guide rails being inserted in guide holes at both sides of the body housing; and
a torsion spring mounted in each of the guide head parts for providing elastic forces necessary to slide the sliding cover.

8. The apparatus as set forth in claim 7,
wherein each of the guide rails is provided at the inside thereof with a sliding protrusion, the sliding protrusion being engaged in a sliding groove formed each side of the body housing,
wherein a locking protrusion is formed below each sliding protrusion, and
wherein a rail side through-hole is formed below each locking protrusion, the rail side through-hole being extended in the longitudinal direction of the guide rail such that a button protrusion of a button provided at each side of the body housing can be inserted through the rail side through-hole, and the rail can be slid.

9. The apparatus as set forth in claim 8,
wherein a protrusion side catching surface is formed at the upper side of each sliding locking protrusion so that the protrusion side catching surface is engageable with a catching jaw formed at each locker groove, and
wherein an inclined surface is formed at a lower side of each sliding locking protrusion so that the sliding locking protrusion can be inserted into the corresponding locker groove.

10. The apparatus as set forth in claim 7 or 8, wherein a first end of each torsion spring is connected to a corresponding first spring connection part formed on one end of the body housing, second end of each torsion spring is connected to a corresponding second spring connection part formed on the sliding cover, and the second end of each torsion spring also connected to a corresponding third spring connection part formed on the guide head part.

11. The apparatus as set forth in claim 8 or 9,
wherein the body housing is provided at each side thereof with a sliding groove, the sliding groove being engaged with a corresponding locking protrusion for guiding the locking protrusion when the locking protrusion is slid, and
wherein a stopper is formed at the upper end of each sliding groove for stopping the sliding movement of the locking protrusion.

12. The apparatus as set forth in one of claims 6 to 11, wherein the locking units are disposed symmetrically to each other along the longitudinal direction of the body housing.

13. The apparatus as set forth in claim 8, wherein each locking unit comprises:
a button provided at a prescribed position on a side of the body housing;
a locker provided at a position corresponding to the button, the locker being moveable in and out as the buttons are pressed so that the locker is engaged with or disengaged from the locking protrusion of the guide rail; and
a coil spring disposed in the locker, for providing elastic forces necessary to move the locker in and out.

14. The apparatus as set forth in one of claims 6 to 13, wherein the body housing is further provided on each side thereof with a button hole so that a respective button can be moved in and out as the button is pressed.

15. The apparatus as set forth in claim 13,
wherein each button is provided at the upper and lower parts thereof with a button side latching protrusion, the button side latching protrusion being engageable with latching jaws formed at each of the button holes so that separation of the button from the body housing is prevented, and
wherein each button is provided at the inside thereof with a button protrusion, the button protrusion being inserted through the rail side through-hole of each of the guide rails.

16. The apparatus as set forth in claim 13, wherein each locker comprises:
at least one locker groove formed at one side of the locker so that the locking protrusion of the rail is engaged into or disengaged from the locker groove as the rail is slid and the button is pressed;
a protrusion contacting part formed at a center part of a first side of the locker for contacting the end of the button protrusion; and
a supporting protrusion formed at a center part of a second side of the locker for supporting the corresponding coil spring while the supporting protrusion is engaged with the corresponding coil spring.

17. The apparatus as set forth in claim 13,
wherein each locker is provided at the upper and lower parts thereof with a pair of separation preventing protrusions, the separation preventing protrusions being engageable with a corresponding locker catching jaw formed at the body housing so that separation of the locker from the body housing is prevented, and
wherein each separation preventing protrusion is provided with a locker guide groove engaged with a corresponding locker guide rail formed at the body housing so that the lockers can be moved in and out.

18. The apparatus as set forth in claim 8,
wherein each side of the body housing is provided at a prescribed positions with an engagement part so that the locker is securely located in it respective engagement part, while the lockers are moved in and out,
wherein each engagement part is provided at the upper and lower parts thereof with a locker guide rail, the locker guide rail being engaged with the locker guide grooves for guiding the corresponding locker, and
wherein a locker catching jaw is formed at one end of each locker guide rail, the locker catching jaw contacting the corresponding separation preventing protrusion of the locker.

19. The apparatus as set forth in claim 18, wherein a spring locating groove is formed at the center of each engagement part so that its corresponding coil spring is securely located in the spring locating groove.
